# EUROPÄISCHE PATENTSCHRIFT

(11) **EP 3 734 810 B1**
(45) Veröffentlichungstag und Bekanntmachung des Hinweises auf die Patenterteilung: **15.09.2021**
(21) Anmeldenummer: 19171793.3
(22) Anmeldetag: 30.04.2019
(51) Int. Cl.: H02K 9/00, H02K 41/02, H02K 9/22, H02K 5/20, H02K 9/19

(54) **KÜHLVORRICHTUNG FÜR LINEARMOTOR MIT VERBESSERTER ABDICHTUNG**
COOLING DEVICE FOR LINEAR MOTOR WITH IMPROVED SEALING
DISPOSITIF DE REFROIDISSEMENT POUR MOTEUR LINÉAIRE À ÉTANCHÉITÉ AMÉLIORÉE

(43) Veröffentlichungstag der Anmeldung: 04.11.2020
(73) Patentinhaber: Siemens Aktiengesellschaft, 80333 München (DE)
(72) Erfinder: Zisler, Michael, 97717 Euerdorf-Wirmsthal (DE)

(56) Entgegenhaltungen:
- EP-A1- 3 337 019
- WO-A2-03/021756
- DE-A1- 19 604 642
- DE-A1-102006 017 033
- DE-A1-102016 114 507
- DE-A1-102016 114 742
- US-A1- 2008 245 508
- US-A1- 2018 092 250

## Beschreibung

Kühlvorrichtung für Linearmotor mit verbesserter Abdichtung Die vorliegende Erfindung geht aus von einer Kühlvorrichtung für einen elektrischen Linearmotor,
- wobei die Kühlvorrichtung ein Trägerelement aufweist, das auf ein Aktivteil des elektrischen Linearmotors aufsetzbar ist,
- wobei die Kühlvorrichtung mindestens ein am Trägerelement mittels Halteelementen montiertes Kühlelement aufweist,
- wobei die Halteelemente sowohl an ihrer dem Aktivteil des elektrischen Linearmotors zugewandten Seite als auch an ihrer von dem Aktivteil des elektrischen Linearmotors abgewandten Seite jeweils eine plane Fläche aufweisen.

Die vorliegende Erfindung geht weiterhin aus von einer Baueinheit,
- wobei die Baueinheit ein Aktivteil eines elektrischen Linearmotors aufweist,
- wobei auf das Aktivteil eine derartige Kühlvorrichtung aufgesetzt ist.

Die vorliegende Erfindung geht weiterhin aus von einem elektrischen Linearmotor mit einem Primärteil und einem Sekundärteil.

Die genannten Gegenstände sind aus der WO 03/021 756 A2 oder der korrespondierenden US 2004/0 201 291 A1 bekannt. Ähnlicherweise offenbaren auch US2018/092250 und EP3337019 derartige Kühlvorrichtungen.

Elektrische Linearmotoren werden bei verschiedenen Anwendungen eingesetzt. Beispielsweise werden sie unter anderem bei Werkzeugmaschinen eingesetzt, um Maschinenteile linear zu verfahren.

Bei Werkzeugmaschinen, aber auch bei vielen anderen Anwendungen besteht die Gefahr, dass Flüssigkeit - auch Wasser - in den Linearmotor eindringt und dort Kurzschlüsse verursacht. Zum Schutz vor derartigen Kurzschlüssen wird im Stand der Technik der Linearmotor in einer relativ hohen Schutzart gekapselt, meist IP 65. Eine entsprechende Kapselung der Kühlvorrichtung und der Schnittstelle der Kühlvorrichtung zum elektrischen Linearmotor ist im Stand der Technik nicht gegeben.

Die Aufgabe der vorliegenden Erfindung besteht darin, Möglichkeiten zu schaffen, bereits die Kühlvorrichtung und die Schnittstelle der Kühlvorrichtung zum elektrischen Linearmotor in hoher Schutzart (mindestens IP 65, besser IP 67) zu kapseln.

Die Aufgabe wird durch eine Kühlvorrichtung mit den Merkmalen des Anspruchs 1 gelöst. Vorteilhafte Ausgestaltungen der Kühlvorrichtung sind Gegenstand der abhängigen Ansprüche 2 bis 6.

Erfindungsgemäß wird eine Kühlvorrichtung der eingangs genannten Art dadurch ausgestaltet,
- dass die Halteelemente jeweils eine sich zwischen den beiden planen Flächen erstreckende Durchtrittsöffnung für den Durchtritt eines Befestigungselements aufweisen und
- dass in die planen Flächen jeweils eine um die jeweilige Durchtrittsöffnung umlaufende Ausnehmung eingebracht ist, in die jeweils ein Dichtungselement eingebracht ist.

Dadurch ist es auf einfache Weise möglich, einerseits die Befestigung der Kühlvorrichtung am Aktivteil des Linearmotors vorzunehmen und andererseits die Dichtigkeit zu gewährleisten.

Vorzugsweise durchgreifen die Halteelemente das Trägerelement und weisen weiterhin die planen Flächen der Halteelemente einen einheitlichen Abstand voneinander auf. Dadurch wirken die Halteelemente als Distanzstücke, welche einen definierten Abstand eines auf die Kühlvorrichtung aufgesetzten Abdeckelements - beispielsweise bei einer Werkzeugmaschine eines Schlittens, auf dem ein zu bearbeitendes Werkstück gehalten ist - von dem Aktivteil des elektrischen Linearmotors einstellen.

Die Dichtungselemente können nach Bedarf ausgebildet sein. Beispielsweise können sie als aufgespritzte oder aufgeschäumte Dichtungselemente realisiert sein. Vorzugsweise sind die Dichtungselemente jedoch als aus einer dauerelastischen Masse bestehende Dichtungsringe ausgebildet. Insbesondere können die Dichtungsringe als O-Ringe ausgebildet sein.

Es ist möglich, dass die Halteelemente am Trägerelement mittels eines Bajonettverschlusses oder Rastnasen befestigt sind. Alternativ ist es möglich, dass die Halteelemente aus einem dem Aktivteil des elektrischen Linearmotors zugewandten Unterteil und einem von dem Aktivteil des elektrischen Linearmotors abgewandten Oberteil bestehen, dass das Unterteil und das Oberteil mittels eines Bajonettverschlusses oder mittels einer Rastverbindung miteinander befestigt sind und dass die Halteelemente bei jeweiligen miteinander befestigten Unterteilen und Oberteilen am Trägerelement geklemmt gehalten werden. In allen vier Ausgestaltungen ergibt sich eine einfache und kostengünstige Befestigung der Halteelemente am Trägerelement, die zumindest bei Bajonettverschlüssen darüber hinaus auch auf einfache Weise wieder lösbar ist.

Die Aufgabe wird weiterhin durch eine Baueinheit mit den Merkmalen des Anspruchs 7 gelöst. Erfindungsgemäß wird eine Baueinheit der eingangs genannten Art dadurch ausgestaltet,
- dass die auf das Aktivteil aufgesetzte Kühlvorrichtung als erfindungsgemäße Kühlvorrichtung ausgebildet ist,
- dass auf die (erfindungsgemäße) Kühlvorrichtung ein Abdeckelement aufgesetzt ist und
- dass das Abdeckelement mittels durch die Durchtrittsöffnungen der Halteelemente durchtretenden Befestigungselementen an dem Aktivteil befestigt ist, so dass das Aktivteil unter Druck an den dem Aktivteil des elektrischen Linearmotors zugewandten planen Flächen der Halteelemente anliegt und das Abdeckelement unter Druck an den von dem Aktivteil des elektrischen Linearmotors abgewandten planen Flächen der Halteelemente anliegt.

Die Aufgabe wird weiterhin durch einen elektrischen Linearmotor mit den Merkmalen des Anspruchs 8 gelöst. Erfindungsgemäß bildet bei einem elektrischen Linearmotor der eingangs genannten Art das Primärteil oder das Sekundärteil zusammen mit einer erfindungsgemäßen Kühlvorrichtung, einem Abdeckelement und Befestigungselementen eine erfindungsgemäße Baueinheit.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen elektrischen Linearmotor in einer Werkzeugmaschine,
- FIG 2: eine perspektivische Ansicht einer Kühlvorrichtung von schräg oben,
- FIG 3: eine perspektivische Ansicht eines Teils der Kühlvorrichtung von FIG 2 von schräg unten und
- FIG 4: eine perspektivische Schnittansicht der Kühlvorrichtung von FIG 2 von schräg oben.

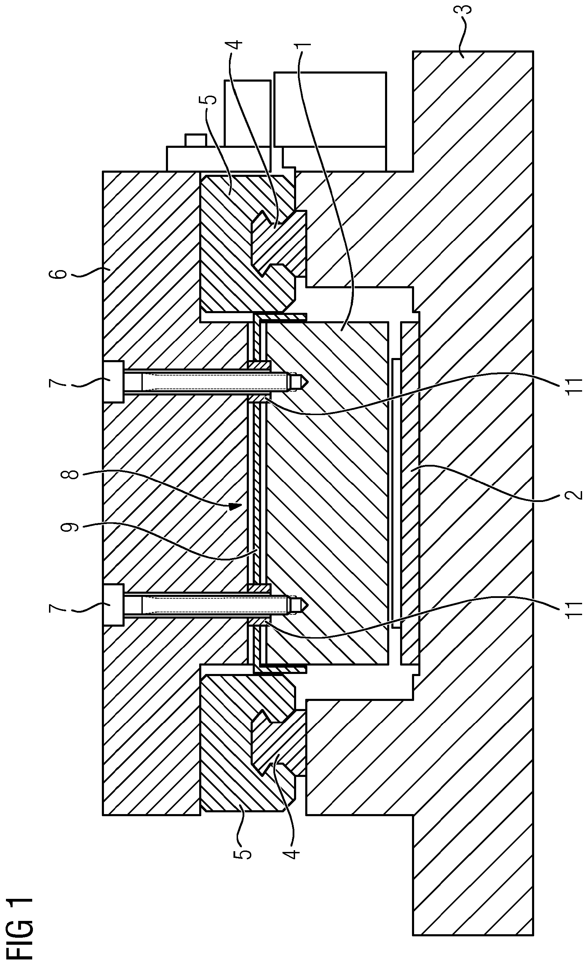

Gemäß FIG 1 weist ein elektrischer Linearmotor ein Primärteil 1 und ein Sekundärteil 2 auf. Das Primärteil 1 und das Sekundärteil 2 sind die beiden Aktivteile des elektrischen Linearmotors. Der elektrische Linearmotor wird im Rahmen von FIG 1 bei einer Werkzeugmaschine verwendet. Die vorliegende Erfindung ist jedoch nicht auf Werkzeugmaschinen beschränkt. Vielmehr ist sie universell bei beliebigen Linearmotoren anwendbar. Weiterhin ist im Rahmen der vorliegenden Erfindung das Primärteil 1 das bewegte Teil des elektrischen Linearmotors, das Sekundärteil 2 das feststehende Teil. Prinzipiell könnte es aber auch umgekehrt sein. Weiterhin wird die vorliegende Erfindung nachstehend in Verbindung mit einer Ausgestaltung erläutert, bei welcher das Primärteil 1 zusammen mit weiteren, später noch eingeführten Elementen eine erfindungsgemäße Baueinheit bildet. Die gleiche Ausgestaltung könnte prinzipiell aber auch mit einem Sekundärteil 2 realisiert werden.

Das Sekundärteil 2 ist im Rahmen der konkreten Anwendung in einem Maschinenbett 3 angeordnet. Das Maschinenbett 3 weist Führungselemente 4 auf, beispielsweise Führungsschienen. Die Führungsschienen führen im Zusammenwirken mit entsprechenden Gegenelementen 5 ein relativ zu dem Maschinenbett 3 bewegtes Element, beispielsweise einen Schlitten 6. Der Schlitten 6 ist ein Abdeckelement im Sinne der vorliegenden Erfindung.

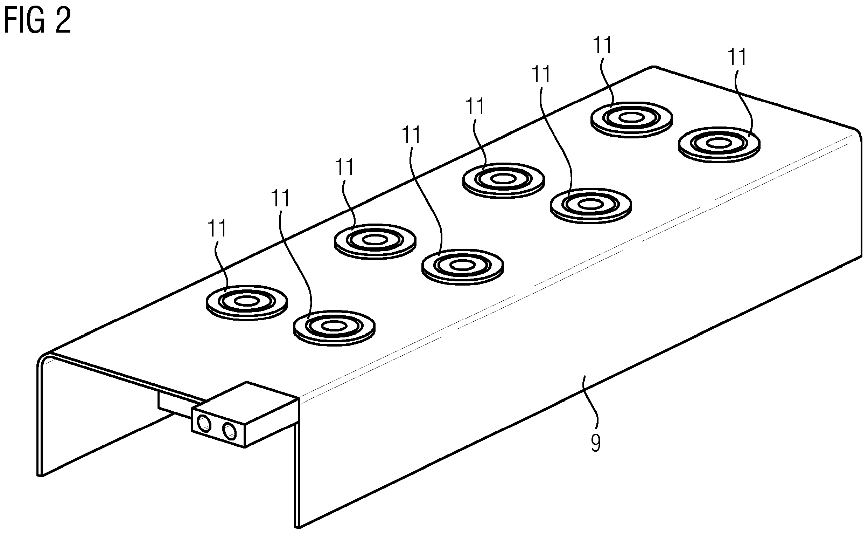

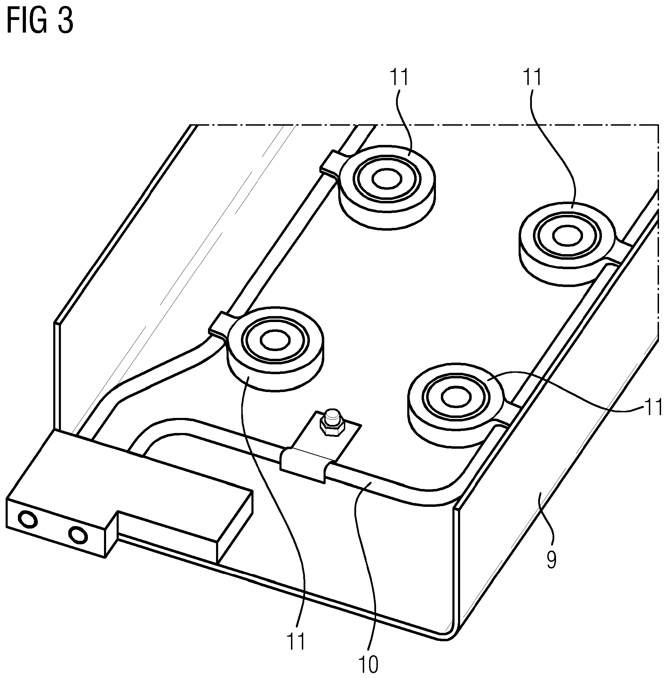

Der Schlitten 6 ist mit dem Primärteil 1 durch Befestigungselemente 7 verbunden. Hierbei ist zwischen dem Primärteil 1 und dem Schlitten 6 eine Kühlvorrichtung 8 angeordnet. Die Kühlvorrichtung 8 wird später in Verbindung mit den FIG 2 bis 4 näher erläutert werden. Momentan sei lediglich erwähnt, dass die Befestigungselemente 7 entsprechend der Darstellung in FIG 1 die Kühlvorrichtung 8 durchdringen, so dass sie den Schlitten 6 (das Abdeckelement) über die Kühlvorrichtung 8 an das Primärteil 1 andrücken. Dadurch liegt die Kühlvorrichtung 8 unter Druck am Primärteil 1 an und liegt weiterhin der Schlitten 6 (das Abdeckelement) unter Druck an der Kühlvorrichtung 8 an. Die Befestigungselemente 7 können beispielsweise als übliche Schraubbolzen ausgebildet sein.

Gemäß den FIG 2 bis 4 weist die Kühlvorrichtung 8 ein Trägerelement 9 auf. Das Trägerelement 9 ist - zusammen mit anderen, später noch eingeführten Elementen der Kühlvorrichtung 8 - auf das Primärteil 1 aufgesetzt. Die Kühlvorrichtung 8 weist weiterhin mindestens ein Kühlelement 10 auf, beispielsweise eine Kühlschlange. Das Kühlelement 10 ist mittels Halteelementen 11 am Trägerelement 9 montiert. Beispielsweise kann es von den Halteelementen 11 kraft- oder formschlüssig gehalten werden.

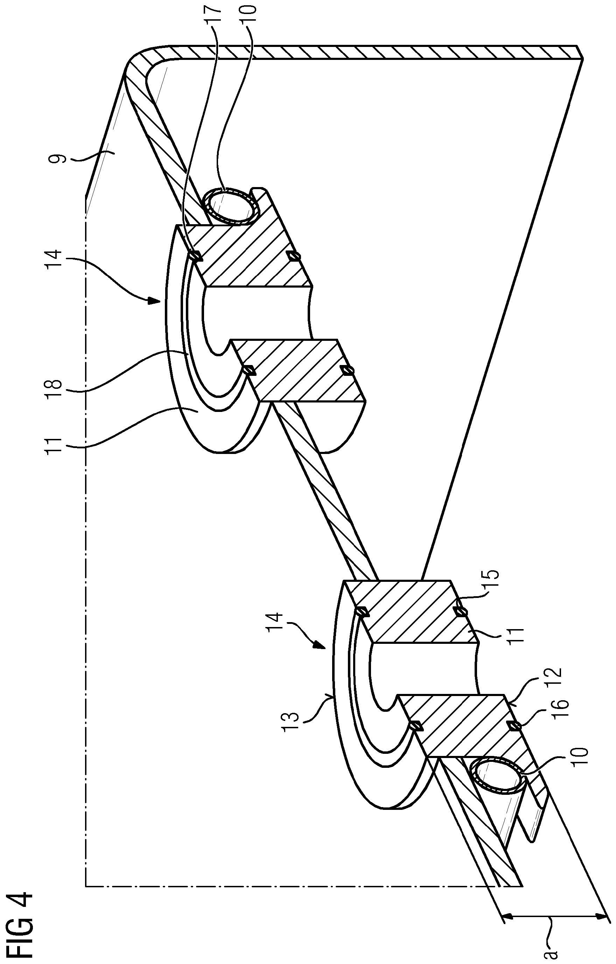

Die Halteelemente 11 weisen - siehe besonders deutlich FIG 4
- jeweils eine dem Primärteil 1 zugewandte Fläche 12 und eine von dem Primärteil 1 abgewandte Fläche 13 auf. Die beiden Flächen 12, 13 sind plan. Weiterhin erstreckt sich eine jeweilige Durchtrittsöffnungen 14 zwischen den beiden planen Flächen 12, 13. Durch die Durchtrittsöffnungen 14 hindurch erstrecken sich - siehe FIG 1 - im montierten Zustand die Befestigungselemente 7. In der Regel durchgreifen die Halteelemente 11 das Trägerelement 9, so dass in Richtung der Axialerstreckung der Durchtrittsöffnungen 14 gesehen das Trägerelement 9 zwischen den planen Flächen 12, 13 angeordnet ist. Weiterhin weisen die planen Flächen 12, 13 einen Abstand a voneinander auf. Der Abstand a ist - zumindest in der Regel
- einheitlich für die Halteelemente 11. Weiterhin ist - zumindest in der Regel - die Aufteilung des Abstands a derart, dass die planen Flächen 12 einen einheitlichen Abstand vom Trägerelement 9 aufweisen und demzufolge auch die planen Flächen 13 einen einheitlichen Abstand vom Trägerelement 9 aufweisen. Die planen Flächen 12 liegen also in der Regel in einer einheitlichen Ebene, ebenso die planen Flächen 13.

Zum Abdichten des Primärteils 1 gegenüber dem Trägerelement 9 ist in die plane Fläche 12 eine Ausnehmung 15 eingebracht. Die Ausnehmung 15 läuft um die Durchtrittsöffnung 14 des jeweiligen Halteelements 11 um. In die Ausnehmung 15 ist ein Dichtungselement 16 eingebracht. Das Dichtungselement 16 ist in der Regel als Dichtungsring ausgebildet, der aus einer dauerelastischen Masse besteht. Beispielsweise kann das Dichtungselement 16 als O-Ring ausgebildet sein.

In analoger Weise ist zum Abdichten des Trägerelements 9 gegenüber dem Schlitten 6 (dem Abdeckelement) in die plane Fläche 13 eine Ausnehmung 17 eingebracht. Die Ausnehmung 17 läuft ebenfalls um die Durchtrittsöffnung 14 des jeweiligen Halteelements 11 um. In die Ausnehmung 17 ist ein Dichtungselement 18 eingebracht. Das Dichtungselement 18 ist in der Regel ebenfalls als Dichtungsring ausgebildet, der aus einer dauerelastischen Masse besteht. Beispielsweise kann das Dichtungselement 18 ebenfalls als O-Ring ausgebildet sein.

In der Regel ist weiterhin eine Abdichtung der Befestigungselemente 7 gegenüber dem Schlitten 6 (dem Abdeckelement) vorhanden. Diese Abdichtung ist als solche nicht Gegenstand der vorliegenden Erfindung.

Zum Herstellen der erfindungsgemäßen Baueinheit wird zunächst auf das Primärteil 1 die Kühlvorrichtung 8 aufgesetzt. Sodann wird auf die Kühlvorrichtung 8 der Schlitten 6 (das Abdeckelement) aufgesetzt. Mittels der Befestigungselemente 7 wird schließlich der Schlitten 6 (das Abdeckelement) am Primärteil 1 befestigt. Die Befestigungselemente 7 treten hierbei, wie bereits in Verbindung mit FIG 1 erwähnt, durch die Durchtrittsöffnungen 14 der Halteelemente 11 hindurch. Aufgrund des durch die Befestigungselemente 7 ausgeübten Druckes liegt somit das Primärteil 1 unter Druck an der planen Fläche 12 an und liegt weiterhin der Schlitten 6 (das Abdeckelement) unter Druck an der planen Fläche 13 an.

Die Art und Weise, auf welche die Halteelemente 11 mit dem Trägerelement 9 verbunden sind, kann nach Bedarf sein. Beispielsweise können die Halteelemente 11 am Trägerelement 9 mittels eines Bajonettverschlusses befestigt sein. Auch eine Befestigung mittels Rastnasen ist möglich. Auch ist es möglich, dass die Halteelemente 11 zweiteilig ausgebildet sind, so dass sie jeweils aus einem Unterteil und einem Oberteil bestehen. Das Unterteil ist in diesem Fall dem Primärteil 1 zugewandt, das Oberteil dem Schlitten 6 (dem Abdeckelement). Das Unterteil und das Oberteil können in diesem Fall lösbar miteinander befestigt sein. Wenn das Unterteil und das Oberteil miteinander befestigt sind, wird das jeweilige Halteelement 11 in diesem Fall am Trägerelement 9 geklemmt gehalten. Die Art der Verbindung von jeweiligem Unterteil und jeweiligem Oberteil miteinander kann wieder nach Bedarf sein. Besonders vorteilhaft ist jedoch eine Verbindung von Unterteil und Oberteil miteinander mittels eines Bajonettverschlusses oder mittels einer Rastverbindung.

Zusammengefasst betrifft die vorliegende Erfindung somit folgenden Sachverhalt:
Eine Kühlvorrichtung 8 für einen elektrischen Linearmotor weist ein Trägerelement 9 auf, das auf ein Aktivteil 1 des elektrischen Linearmotors aufsetzbar ist. Die Kühlvorrichtung 8 weist mindestens ein am Trägerelement 9 mittels Halteelementen 11 montiertes Kühlelement 10 auf. Die Halteelemente 11 weisen sowohl an ihrer dem Aktivteil 1 des elektrischen Linearmotors zugewandten Seite als auch an ihrer von dem Aktivteil 1 des elektrischen Linearmotors abgewandten Seite jeweils eine plane Fläche 12, 13 auf. Die Halteelemente 11 weisen weiterhin jeweils eine sich zwischen den beiden planen Flächen 12, 13 erstreckende Durchtrittsöffnung 14 für den Durchtritt eines Befestigungselements 7 auf. In die planen Flächen 12, 13 ist jeweils eine um die jeweilige Durchtrittsöffnung 14 umlaufende Ausnehmung 15, 17 eingebracht, in die jeweils ein Dichtungselement 16, 18 eingebracht ist.

Die vorliegende Erfindung weist viele Vorteile auf. So ist insbesondere auf einfache und zuverlässige Art und Weise eine flüssigkeitsdichte Kapselung (bis zu IP 67, teilweise sogar bis zu IP 68) realisierbar. Eine derart gute Kapselung wird insbesondere bei Werkzeugmaschinen benötigt. Weiterhin wird Montagefreundlichkeit deutlich erhöht und werden die Kosten für die Montage verringert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang der Erfindung wird durch die Ansprüche definiert.

## Patentansprüche

1. Kühlvorrichtung für einen elektrischen Linearmotor,
- wobei die Kühlvorrichtung ein Trägerelement (9) aufweist, das auf ein Aktivteil (1) des elektrischen Linearmotors aufsetzbar ist,
- wobei die Kühlvorrichtung mindestens ein am Trägerelement (9) mittels Halteelementen (11) montiertes Kühlelement (10) aufweist,
- wobei die Halteelemente (11) sowohl an ihrer dem Aktivteil (1) des elektrischen Linearmotors zugewandten Seite als auch an ihrer von dem Aktivteil (1) des elektrischen Linearmotors abgewandten Seite jeweils eine plane Fläche (12, 13) aufweisen,
- wobei die Halteelemente (11) jeweils eine sich zwischen den beiden planen Flächen (12, 13) erstreckende Durchtrittsöffnung (14) für den Durchtritt eines Befestigungselements (7) aufweisen,
**dadurch gekennzeichnet,**
- **dass** in die planen Flächen (12, 13) jeweils eine um die jeweilige Durchtrittsöffnung (14) umlaufende Ausnehmung (15, 17) eingebracht ist, in die jeweils ein Dichtungselement (16, 18) eingebracht ist.

2. Kühlvorrichtung nach Anspruch 1,
**dadurch gekennzeichnet,**
**dass** die Halteelemente (11) das Trägerelement (9) durchgreifen und dass die planen Flächen (12, 13) der Halteelemente (11) einen einheitlichen Abstand (a) voneinander aufweisen.

3. Kühlvorrichtung nach Anspruch 1 oder 2,
**dadurch gekennzeichnet,**
**dass** die Dichtungselemente (16, 18) als aus einer dauerelastischen Masse bestehende Dichtungsringe ausgebildet sind.

4. Kühlvorrichtung nach Anspruch 3,
**dadurch gekennzeichnet,**
**dass** die Dichtungsringe als O-Ringe ausgebildet sind.

5. Kühlvorrichtung nach einem der Ansprüche 1 bis 4,
**dadurch gekennzeichnet,**
**dass** die Halteelemente (11) am Trägerelement (9) mittels eines Bajonettverschlusses oder mittels Rastnasen befestigt sind.

6. Kühlvorrichtung nach einem der Ansprüche 1 bis 4,
**dadurch gekennzeichnet,**
**dass** die Halteelemente (11) aus einem dem Aktivteil (1) des elektrischen Linearmotors zugewandten Unterteil und einem von dem Aktivteil (1) des elektrischen Linearmotors abgewandten Oberteil bestehen, dass das Unterteil und das Oberteil mittels eines Bajonettverschlusses oder mittels einer Rastverbindung miteinander befestigt sind und dass die Halteelemente bei jeweiligen miteinander befestigten Unterteilen und Oberteil am Trägerelement (9) geklemmt gehalten werden.

7. Baueinheit, die eine Kühlvorrichtung (8) nach einem der Ansprüche 1 bis 6, ein Abdeckelement (6) und Befestigungselemente (7) aufweist,
- wobei die Baueinheit ein Aktivteil (1) eines elektrischen Linearmotors aufweist,
- wobei auf das Aktivteil (1) die genannte Kühlvorrichtung (8) aufgesetzt ist,
- wobei auf die Kühlvorrichtung (8) das genannte Abdeckelement (6) aufgesetzt ist und
- wobei das Abdeckelement (6) mittels durch die Durchtrittsöffnungen (14) der Halteelemente (11) durchtretenden Befestigungselementen (7) an dem Aktivteil (1) befestigt ist, so dass das Aktivteil (1) unter Druck an den dem Aktivteil (1) des elektrischen Linearmotors zugewandten planen Flächen (12) der Halteelemente (11) anliegt und das Abdeckelement (6) unter Druck an den von dem Aktivteil (1) des elektrischen Linearmotors abgewandten planen Flächen (13) der Halteelemente (11) anliegt.

8. Elektrischer Linearmotor mit einem Primärteil (1) und einem Sekundärteil (2), wobei das Primärteil (1) oder das Sekundärteil (2) zusammen mit einer Kühlvorrichtung (8) nach einem der Ansprüche 1 bis 6, einem Abdeckelement (6) und Befestigungselementen (7) eine Baueinheit nach Anspruch 7 bildet.

## Claims

1. Cooling apparatus for an electric linear motor,
- wherein the cooling apparatus has a carrier element (9) which can be placed on an active part (1) of the electric linear motor,
- wherein the cooling apparatus has at least one cooling element (10) assembled on the carrier element (9) by means of retaining elements (11),
- wherein the retaining elements (11) in each case have a planar area (12, 13) both on their side facing the active part (1) of the electric linear motor and also on their side facing away from the active part (1) of the electric linear motor,
- wherein the retaining elements (11) in each case have an opening (14) which extends between the two planar areas (12, 13) to allow a fastening element (7) to pass **characterised in that**
- a cutout (15, 17) which circulates around the respective opening (14) is introduced into the planar areas (12, 13) in each case, into which cutout a sealing element (16, 18) is introduced in each case.

2. Cooling apparatus according to claim 1,
**characterised in that**
the retaining elements (11) pass through the carrier element (9) and that the planar areas (12, 13) of the retaining elements (11) have a uniform distance (a) from one another.

3. Cooling apparatus according to claim 1 or 2,
**characterised in that**
the sealing elements (16, 18) are embodied as sealing rings which consist of a permanently elastic mass.

4. Cooling apparatus according to claim 3,
**characterised in that**
the sealing rings are embodied as O-rings.

5. Cooling apparatus according to one of claims 1 to 4,
**characterised in that**
the retaining elements (11) are fastened to the carrier element (9) by means of a bayonet connection or by means of lugs.

6. Cooling apparatus according to one of claims 1 to 4,
**characterised in that**
the retaining elements (11) consist of a lower part which faces the active part (1) of the electric linear motor and an upper part which faces away from the active part (1) of the electric linear motor, that the lower part and the upper part are fastened to one another by means of a bayonet connection or by means of a snap-on connection and that the retaining elements are held clamped to the carrier element (9) when the lower parts and upper part are fastened to one another in each case.

7. Assembly which has a cooling apparatus (8) according to one of claims 1 to 6, a cover element (6) and fastening elements (7)
- wherein the assembly has an active part (1) of an electric linear motor,
- wherein the cited cooling apparatus (8) is placed on the active part (1),
- wherein the cited cover element (6) is placed on the cooling apparatus (8) and
- wherein the cover element (6) is fastened to the active part (1) by means of fastening elements (7) passing through the openings (14) of the retaining elements (11) so that the active part (1) rests in a pressurized manner on the planar areas (12) of the holding elements (11) which face the active part (1) of the electric linear motor and the cover element (6) rests in a pressurized manner on the planar areas (13) of the retaining elements (11) which face away from the active part (1) of the electric linear motor.

8. Electric linear motor with a primary part (1) and a secondary part (2), wherein the primary part (1) or the secondary part (2), together with a cooling apparatus (8) according to one of claims 1 to 6, a cover element (6) and fastening elements (7), forms an assembly according to claim 7.

## Revendications

1. Dispositif de refroidissement d'un moteur électrique linéaire,
- dans lequel le dispositif de refroidissement a un élément (9) de support, qui peut être posé sur une partie (1) active du moteur électrique linéaire,
- dans lequel le dispositif de refroidissement a au moins un élément (10) de refroidissement monté sur l'élément (9) de support au moyen d'éléments (11) de maintien,
- dans lequel les éléments (11) de maintien ont, tant de leur côté tourné vers la partie (1) active du moteur électrique linéaire que de de leur côté loin de la partie (1) active du moteur électrique linéaire, respectivement une surface (12, 13) plane,
- dans lequel les éléments (11) de maintien ont chacun une ouverture (14) de passage, s'étendant entre les deux surfaces (12, 13) planes, pour le passage d'un élément (7) de fixation, **caractérisé**
- **en ce que** dans les surfaces (12, 13) planes est ménagé respectivement un évidement (15, 17), qui fait le tour de l'ouverture (14) respective de passage et dans lequel est introduit respectivement un élément (16, 18) d'étanchéité.

2. Dispositif de refroidissement suivant la revendication 1,
**caractérisé**
**en ce que** les éléments (11) de maintien traversent l'élément (9) de support et **en ce que** les surfaces (12, 13) planes des éléments (11) de maintien sont à une même distance (a) les uns des autres.

3. Dispositif de refroidissement suivant la revendication 1 ou 2,
**caractérisé**
**en ce que** les éléments (16, 18) d'étanchéité sont constitués de bagues d'étanchéité en une masse à élasticité permanente.

4. Dispositif de refroidissement suivant la revendication 3,
**caractérisé**
**en ce que** les bagues d'étanchéité sont constituées sous la forme de joints toriques.

5. Dispositif de refroidissement suivant l'une des revendications 1 à 4,
**caractérisé**
**en ce que** les éléments (11) de maintien sont fixés à l'élément (9) de support au moyen d'une fermeture à baïonnette ou au moyen de becs d'encliquetage.

6. Dispositif de refroidissement suivant l'une des revendications 1 à 4,
**caractérisé**
**en ce que** les éléments (11) de maintien sont constitués d'une partie inférieure, tournée vers la partie (1) active du moteur électrique linéaire, et d'une partie supérieure, loin de la partie (1) active du moteur électrique linéaire, **en ce que** la partie inférieure et la partie supérieure sont fixées l'une à l'autre au moyen d'une fermeture à baïonnette ou au moyen d'un encliquetage et **en ce que** les éléments de maintien sont, alors que des parties inférieures et la partie supérieure sont fixées ensemble respectivement, maintenus serrés sur l'élément (9) de support.

7. Unité de construction, qui a un dispositif (8) de refroidissement suivant l'une des revendications 1 à 6, un élément (6) de recouvrement et des éléments (7) de fixation,
- dans laquelle l'unité de construction a une partie (1) active d'un moteur électrique linéaire,
- dans laquelle le dispositif (8) de refroidissement est posé sur la partie (1) active,
- dans laquelle l'élément (6) de recouvrement est posé sur le dispositif (8) de refroidissement et
- dans laquelle l'élément (6) de recouvrement est fixé sur la partie (1) active par des éléments (7) de fixation passant dans les ouvertures (14) de passage des éléments (11) de maintien de manière à ce que la partie (1) active soit mise sous pression sur les surfaces (12) planes, tournées vers la partie (1) active du moteur électrique linéaire, des éléments (11) de maintien et de manière à ce que l'élément (6) de recouvrement soit mis sous pression sur les surfaces (13) planes, loin de la partie (1) active du moteur électrique linéaire, des éléments (11) de maintien.

8. Moteur électrique linéaire comprenant une partie (1) primaire et une partie (2) secondaire, la partie (1) primaire ou la partie (2) secondaire formant, ensemble avec un dispositif (8) de refroidissement suivant l'une des revendications 1 à 6, un élément (6) de recouvrement et des éléments (7) de fixation, une unité de construction suivant la revendication 7.
